# FASCICULE DE BREVET EUROPEEN

(11) **EP 3 130 061 B1**
(45) Date de publication et mention de la délivrance du brevet: **01.01.2020**
(21) Numéro de dépôt: 15725879.9
(22) Date de dépôt: 09.04.2015
(51) Int. Cl.: H02K 1/27, H02K 1/16, H02K 15/02, H02K 15/085, H02K 3/12, H02K 15/00, H02K 15/06

(54) **STATOR DE MACHINE ELECTRIQUE TOURNANTE**
STATOR FÜR EINE DREHENDE ELEKTRISCHE MASCHINE
STATOR FOR A ROTARY ELECTRIC MACHINE

(30) Priorité: 10.04.2014 FR 1453217
(43) Date de publication de la demande: 15.02.2017
(73) Titulaire: Moteurs Leroy-Somer, 16915 Angouleme Cedex 9 (FR)
(72) Inventeur: SAINT-MICHEL, Jacques, F-16000 Angoulême (FR)
(74) Mandataire: Nony
(86) Numéro de dépôt international: PCT/IB2015/052590
(87) Numéro de publication internationale: WO 2015/155730

(56) Documents cités:
- FR-A1- 2 801 142
- JP-A- H10 271 716
- JP-A- 2011 097 723
- JP-B2- 2 875 497

## Description

La présente invention concerne les machines électriques tournantes, notamment les machines synchrones, et plus particulièrement les stators de telles machines.

JP 2 875497 porte sur un stator de machine électrique comportant une couronne dentelée dont les portions situées entre deux dents consécutives sont amincies du côté de l'entrefer. Les bobinages sont des bobinages sur dents.

L'invention s'intéresse plus particulièrement aux stators à bobinages répartis. Dans de tels stators, les bobinages sont répartis dans des encoches d'une culasse dentelée, avec des conducteurs électriques de départ et de retour logés chacun dans des encoches différentes et non consécutives, comme décrit par exemple dans la demande de brevet FR 2 801 142, qui porte néanmoins sur une machine à rotor bobiné ou à cage d'écureuil.

JP 2011-097723 (D3) montre des dents individuelles rapportées sur une culasse.

Dans les stators connus, la culasse est dentelée, ménageant des encoches totalement ouvertes ou semi-ouvertes en direction de l'entrefer, de manière à permettre l'introduction des bobinages. Généralement, les encoches semi-ouvertes peuvent recevoir des conducteurs électriques de section transversale circulaire et disposés en vrac, tandis que les encoches ouvertes peuvent recevoir des conducteurs électriques de section transversale rectangulaire, et disposés de manière rangée.

Or, les ouvertures des encoches vers l'entrefer peuvent produire des perturbations électromagnétiques non négligeables, notamment une augmentation de l'entrefer « magnétique » en raison des franges de flux, des pertes fer plus élevées à la surface du rotor pour la même raison, ou encore des couples pulsatoires car les variations de perméance sont relativement brutales.

Il existe donc un besoin pour bénéficier d'un stator de machine électrique tournante permettant un remplissage aisé et efficace des encoches, tout en assurant de meilleures performances électromagnétiques.

L'invention vise à répondre à tout ou partie de ce besoin et elle y parvient, selon l'un de ses aspects, grâce à un stator de machine électrique tournante, comportant :
- une couronne dentelée comportant des dents définissant entre elles des encoches ouvertes radialement vers l'extérieur,
- des bobinages disposés de manière répartie dans les encoches, ayant des conducteurs électriques disposés de manière rangée dans les encoches, et
- une culasse rapportée sur la couronne dentelée.

Par « réparti », on entend qu'au moins l'un des bobinages passe successivement dans deux encoches non adjacentes.

Par « culasse rapportée », il faut comprendre que la culasse n'est pas réalisée d'un seul tenant avec la couronne dentelée mais fixée à cette dernière au cours de la fabrication du stator.

Par « rangés », on entend que les conducteurs électriques ne sont pas disposés dans les encoches en vrac mais de manière ordonnée. Ils sont empilés dans les encoches de manière non aléatoire, étant par exemple disposés en rangées de conducteurs électriques alignés. L'empilement des conducteurs électriques peut par exemple être un empilement selon un réseau hexagonal dans le cas de conducteurs électriques de section transversale circulaire.

L'installation des bobinages peut être facilitée d'une part en ce que l'accès à l'intérieur des encoches est plus aisé, s'agissant d'encoches ouvertes plus largement et en direction de l'extérieur plutôt que vers l'entrefer, et d'autre part en ce que l'espace disponible autour de la couronne dentelée, pour les outillages nécessaires voire même pour une machine à bobiner, est bien plus important que l'espace disponible dans l'alésage du stator. Par ailleurs, l'opération de bobinage est relativement peu coûteuse, dans la mesure où elle peut être effectuée de manière analogue au bobinage d'un rotor d'une machine à courant continu ou asynchrone à rotor bobiné.

En outre, un stator conforme à l'invention présente de nombreux avantages du point de vue électromagnétique. Il permet de réduire fortement les perturbations électromagnétiques liées à la présence des encoches ainsi que le bruit magnétique. En outre, le remplissage des encoches étant facilité, le taux de remplissage peut être amélioré, ce qui peut permettre d'augmenter encore les performances de la machine. Le couple volumique notamment peut être augmenté, et l'on peut réduire le calibre du variateur électronique ou augmenter le rendement.

Enfin, le coût de fabrication du stator peut être réduit, compte tenu du fait que la quantité nécessaire de tôles magnétique peut être moindre.

La couronne dentelée est formée de l'ensemble des dents du stator réunies à leur base du côté de l'entrefer. Les dents sont réunies par des ponts tangentiels.

Au moins une encoche peut être fermée du côté de l'entrefer par un pont tangentiel reliant entre elles deux dents consécutives de la couronne dentelée, mieux toutes les encoches peuvent être fermées du côté de l'entrefer chacune par un pont tangentiel reliant entre elles deux dents consécutives de la couronne dentelée. Le ou les ponts tangentiels sont de largeur constante. En variante, le ou les ponts tangentiels peuvent être de largeur décroissante puis croissante.

Au moins une encoche peut être à bords radiaux parallèles entre eux, mieux toutes les encoches.

Au moins une encoche est en section transversale, perpendiculairement à l'axe de rotation, de forme hexagonale. Au moins une encoche est en section transversale à fond se rétrécissant en direction de l'entrefer, de forme hexagonale. De préférence, la forme de l'encoche correspond à la forme de l'empilement des conducteurs électriques disposés dans cette dernière, ce qui peut être le cas notamment lorsque l'encoche est de section transversale hexagonale. En outre, les ponts tangentiels sont dans ce cas de largeur non constante, diminuant puis augmentant linéairement. Une telle configuration des ponts tangentiels permet de minimiser les harmoniques, d'obtenir plus de couple par désaturation des dents et de la culasse, et d'améliorer les transferts thermiques.

Au moins une dent, mieux toutes les dents, peuvent être de forme générale trapézoïdale en section transversale.

Les conducteurs électriques dans les encoches peuvent être de forme en section transversale circulaire, ou polygonale, notamment rectangulaire, cette liste n'étant pas limitative. Lorsque les conducteurs sont de section transversale circulaire, ils peuvent être disposés dans l'encoche selon un empilement hexagonal. Lorsque les conducteurs sont de section transversale rectangulaire, ils peuvent être disposés dans l'encoche en une rangée unique, étant adjacent les uns aux autres par leurs grands côtés. L'optimisation de l'empilement peut permettre de disposer dans les encoches une plus grande quantité de conducteurs électriques, et parallèlement de diminuer la surface utile de l'encoche, donc d'obtenir ainsi un stator de plus grande puissance, à volume constant.

La couronne dentelée peut être réalisée par enroulement en hélice d'une bande rectiligne de dents reliées par des ponts tangentiels, les dents de la bande rectiligne ménageant entre elles des encoches qui ont des bords convergents, les bords des encoches devenant sensiblement parallèles entre eux lorsque la bande est enroulée sur elle-même pour former la couronne dentelée. La bande peut être en variante formée de secteurs comportant chacun plusieurs dents, les secteurs étant reliés par des ponts de matière, ces secteurs étant découpés dans une bande de tôle rectiligne.

La culasse peut également être réalisée de manière similaire, soit en enroulant directement en hélice une bande de tôle si sa largeur le permet, soit en formant dans ladite bande de tôle des fentes adaptées lors de la découpe, de manière à faciliter cet enroulement.

La culasse peut être rapportée sur la couronne dentelée après l'installation des bobinages dans les encoches.

### Machine et rotor

L'invention a encore pour objet une machine électrique tournante, tel qu'un moteur synchrone ou une génératrice synchrone, comportant un stator tel que défini précédemment. La machine peut être à reluctance. Elle peut constituer un moteur synchrone.

La machine peut fonctionner à une vitesse périphérique nominale (vitesse tangentielle prise au diamètre extérieur du rotor) qui peut être supérieure ou égale à 100 mètres par seconde. Ainsi, la machine selon l'invention permet un fonctionnement à des vitesses importantes si cela est souhaité.

La machine électrique tournante peut comporter un rotor à aimants permanents.

La machine peut avoir une taille relativement élevée. Le diamètre du rotor peut être supérieur à 50 mm, mieux supérieur à 80 mm, étant par exemple compris entre 80 et 500 mm.

Le rotor peut comporter une masse magnétique rotorique et au moins deux aimants permanents définissant un pôle du rotor, les deux aimants permanents étant disposés de part et d'autre d'un axe radial Y dudit pôle dans un logement commun ménagé dans la masse magnétique rotorique et traversé par l'axe radial Y du pôle. Dans un exemple de réalisation de l'invention, les deux aimants permanents sont disposés chacun entièrement d'un même côté de l'axe radial du pôle. Les deux aimants permanents étant disposés dans un logement commun, le rotor est dépourvu de pont de matière magnétique s'étendant entre ces deux aimants et court-circuitant le flux des aimants, de sorte que les fuites magnétiques peuvent en être diminuées.

Par « *axe radial du pôle* », on désigne un axe Y du pôle orienté radialement, c'est-à-dire selon un rayon du rotor. Il peut s'agir d'un axe de symétrie pour le pôle. Cet axe radial peut intersecter le sommet du pôle.

Un logement peut être en forme de U ou de V.

Le rotor peut comporter pour un même pôle au moins deux logements, un logement ayant des branches latérales parallèles aux branches latérales de l'autre logement.

La masse magnétique rotorique peut comporter au moins une pièce polaire reliée au reste de la masse magnétique par des ponts tangentiels ménagés entre chacune des deux extrémités du logement et la surface radialement extérieure du rotor.

Le rotor peut être dépourvu de pont de matière autre que tangentiel. Par « *pont tangentiel* », on désigne un pont de matière ménagé entre un logement et l'entrefer. Cela peut permettre d'améliorer considérablement les performances électromagnétiques.

Les aimants d'un logement peuvent être disposés en retrait des ponts tangentiels correspondants, et ne pas être en contact avec ces derniers.

L'absence de ponts magnétiques radiaux entre les deux aimants permanents peut diminuer la résistance mécanique du rotor. Dans le cas où la vitesse de rotation est suffisamment faible, par exemple lorsque la vitesse périphérique du rotor est inférieure à 70 m/s, la présence de ponts tangentiels peut suffire à assurer la cohésion du rotor.

La masse magnétique rotorique peut comporter au moins une pièce polaire indépendante du reste de la masse magnétique rotorique. Par « *indépendante* », il faut comprendre que la pièce polaire n'est pas formée d'un seul tenant avec le reste des tôles. Ainsi, la masse rotorique est dans ce cas dépourvue de ponts tangentiels tels que définis précédemment. La pièce polaire peut être maintenue solidaire de la masse rotorique par tout autre moyen, notamment un moyen rapporté, par exemple par un tirant longitudinal la traversant et fixé à une ou plusieurs joues d'extrémité du rotor.

Le rotor peut encore comporter au moins un tirant de maintien de la pièce polaire. Le tirant peut être configuré pour traverser la pièce polaire et être fixé à une ou plusieurs joues d'extrémité du rotor.

Le rotor peut comporter au moins une joue d'extrémité, mieux deux joues d'extrémité, à laquelle peuvent être fixés, le cas échéant, les entretoises et les tirants éventuels. Le rotor peut comporter en outre une ou plusieurs joues intermédiaires disposées dans la masse magnétique, c'est-à-dire dans l'empilage des tôles magnétiques de la masse magnétique rotorique.

### Rangées d'aimants permanents

Les aimants permanents peuvent être disposés en rangées concentriques, notamment en deux rangées concentriques, par exemple chacune disposée dans un logement commun à tous les aimants de la rangée. Les rangées peuvent chacune avoir une forme de V ou de U. Par « *rangée* », on désigne une succession d'au moins deux aimants permanents. Une rangée n'est en aucun cas nécessairement linéaire. Au contraire, une rangée peut être en forme de U ou de V.

Cette disposition en plusieurs rangées concentriques permet d'améliorer la concentration du flux sans nécessairement avoir à augmenter la taille des logements ou la quantité d'aimants permanents nécessaires pour obtenir un flux équivalent.

La disposition des aimants en rangées permet d'obtenir dans chaque pôle de la machine une saillance élevée. On parle alors de machine à fort couple de saillance, autrement appelée aussi machine synchro-réluctante. Par « *saillance d'un pôle* », on entend que la réluctance varie lorsque l'on se déplace dans l'entrefer le long du pôle lors de la rotation du rotor.

Dans un exemple de réalisation, les aimants permanents sont disposés en V orientés vers l'entrefer. Pour un même pôle, une rangée d'aimants permanents comporte ainsi deux branches latérales et est dépourvue de branche centrale. Les aimants des branches latérales sont dans ce cas disposés dans les branches latérales du logement. Le logement peut avoir une forme de U, avec une branche centrale qui est dans ce cas dépourvue d'aimant.

Les V d'un même pôle sont disposés de manière concentrique, autrement dit les V d'un même pôle sont imbriqués les uns dans les autres.

Les V sont orientés vers l'entrefer. Par « *V orienté vers l'entrefer* », on entend que le V est ouvert en direction de l'entrefer. Chaque branche latérale d'un V peut être formée par un seul aimant permanent. En variante, chaque branche latérale d'un V est formée par plus d'un aimant permanent, notamment par deux aimants formant par exemple chaque branche du V. Une telle segmentation des aimants peut permettre d'améliorer la circulation du flux dans la masse rotorique et/ou d'introduire des ponts afin de rigidifier celle-ci.

Une branche d'un V peut être formée de plusieurs aimants, par exemple deux. Deux aimants d'une branche du V peuvent être alignés. En variante le ou les aimants formant une branche d'un V peuvent s'étendre chacun selon un axe, les deux axes faisant un angle α entre eux. Cet angle α peut être compris entre 0° et 45°.

Au moins une rangée d'aimants permanents peut être dépourvue d'aimant central, voire toutes les rangées d'un pôle sont dépourvues d'aimant central. Par « *aimant central* », on entend un aimant disposé sur l'axe radial du pôle correspondant. Ainsi, dans une variante de réalisation, les rangées ne comportent que des aimants permanents chacun disposés entièrement d'un côté de l'axe longitudinal du pôle correspondant.

### Aimants permanents partagés

Les aimants permanents peuvent définir des pôles magnétiques du rotor, dont un premier pôle et un deuxième pôle adjacent au premier pôle, les premier et deuxième pôles étant de polarités différentes, des aimants permanents propres au premier pôle contribuant uniquement à la polarité du premier pôle et au moins un aimant permanent partagé contribuant pour partie à la polarité du premier pôle et pour partie à la polarité du deuxième pôle.

Dans ce mode de réalisation, le rotor comporte au moins un aimant permanent partagé entre deux pôles consécutifs. Par « *aimant permanent partagé* », on entend un aimant permanent commun à la définition de deux pôles consécutifs du rotor. Cet aimant peut être ainsi disposé dans un axe interpolaire. Au moins un aimant permanent définissant ledit premier pôle définit également le deuxième pôle du rotor adjacent au premier pôle. La limite entre les deux pôles consécutifs passe par au moins un aimant permanent.

Lorsque les aimants permanents sont disposés en rangées, le premier pôle du rotor peut être défini par au moins une première rangée d'aimants permanents propres et par au moins une deuxième rangée d'aimants permanents partagés, laquelle deuxième rangée définit également au moins en partie le deuxième pôle du rotor adjacent au premier pôle.

Autrement dit, la deuxième rangée d'aimants permanents définit simultanément chacun des deux pôles consécutifs du rotor entre lesquels elle est située. L'aimant permanent partagé appartient à la deuxième rangée d'aimants permanents.

En outre, on peut dire dans ce cas que chaque pôle est défini par un nombre de rangées non entier, étant égal aux nombre de premières rangées plus un demi, autrement dit que la deuxième rangée définissant ledit pôle compte pour moitié, compte tenu de l'utilisation des aimants de la deuxième rangée pour définir simultanément deux pôles consécutifs du rotor.

Ainsi, pour un diamètre donné du rotor, le nombre de rangées par pôle peut être plus élevé, de sorte que la quantité totale d'aimants permanents peut être plus importante, à encombrement équivalent.

En outre, le rapport de saillance peut en être augmenté, dans la mesure où les aimants partagés entre deux pôles consécutifs peuvent former une barrière à la circulation du flux magnétique direct sans affecter le flux magnétique en quadrature. A quantité d'aimants permanents constante, la force électromotrice peut être supérieure et présenter moins d'harmoniques, car le passage par zéro de l'induction dans l'axe interpolaire est plus restreint angulairement.

Grâce à la disposition des aimants dans la masse rotorique, on obtient des niveaux d'induction dans l'entrefer suffisants, même avec une polarité du rotor relativement faible, par exemple inférieure à 6, tout en n'utilisant pas nécessairement des aimants à forte énergie volumique, tels que des aimants réalisés en terres rares, mais au contraire à faible énergie volumique, par exemple réalisés en ferrite. Le coût du rotor peut ainsi en être réduit. En outre, la polarité du rotor peut être réduite si l'application le nécessite. En effet, le rotor selon l'invention permet d'augmenter le niveau d'induction dans l'entrefer sans augmenter la polarité et en utilisant des aimants à faible densité d'énergie.

### Aimants permanents

Les aimants permanents sont de préférence de forme rectangulaire en section transversale. En variante, la largeur d'un aimant prise en section transversale perpendiculairement à l'axe de rotation peut aller en s'amincissant lorsque l'on se dirige vers l'entrefer. Les aimants permanents peuvent être de forme générale trapézoïdale en section transversale. En variante encore, les aimants peuvent être en section transversale curviligne, par exemple de forme en secteur d'anneau.

Les aimants permanents peuvent être d'une largeur comprise entre 4 et 20 mm. Au moins un aimant d'une première rangée, voire au moins la moitié des aimants d'une première rangée, voire tous les aimants d'une première rangée, peuvent être d'une largeur supérieure à 4 mm, mieux supérieure à 8 mm, voire encore supérieure à 12 mm.

Le ou les aimants d'une deuxième rangée d'aimants permanents peuvent être de la même largeur que les aimants d'une première rangée, ou en variante d'une largeur différente, notamment d'une largeur supérieure. Ainsi, au moins un aimant permanent partagé peut être plus large en section transversale qu'un aimant permanent propre, étant par exemple deux fois plus large qu'un aimant permanent propre. Une telle configuration peut permettre de minimiser, voire mieux de supprimer, toute circulation du flux entre deux pôles adjacents, notamment du flux magnétique direct, sans affecter le flux magnétique en quadrature, et ainsi de diminuer les taux d'harmoniques. Le rendement peut s'en trouver amélioré. De plus, le nombre de ponts de matière, notamment de ponts radiaux, peut en être diminué, de sorte que l'on améliore le couple électromagnétique.

Le premier pôle peut comporter une unique première rangée, voire chacun des pôles du rotor peut comporter une unique première rangée.

En variante, ledit premier pôle peut comporter au moins deux premières rangées, voire chacun des pôles du rotor peut comporter au moins deux premières rangées, notamment deux, voire trois, ou plus encore. Dans un mode de réalisation, le premier pôle comporte deux premières rangées. Chacun des pôles du rotor peut comporter deux premières rangées.

Le rotor peut présenter un nombre de pôles compris entre 2 et 12, mieux entre 4 et 10. Le nombre de pôles du rotor peut être inférieur ou égal à 8, voire inférieur ou égal à 6, étant par exemple égal à 4 ou 6.

Les aimants permanents peuvent être réalisés en ferrites ou avec des terres rares ou avec tout autre type de matériau magnétique. Les aimants permanents peuvent en particulier être réalisés au moins partiellement en ferrite. Ils peuvent par exemple ne pas contenir de terres rares, ou à tout le moins contenir moins de 50% de terres rares en masse. La disposition des aimants permet de concentrer le flux des aimants et d'obtenir avec des aimants en ferrite des performances intéressantes.

### Logements

Un logement peut être en section transversale de forme générale rectangulaire. Au moins un logement peut s'étendre radialement sur une longueur supérieure à la longueur radiale de l'aimant correspondant, en section transversale. La forme du logement en section transversale peut être choisie pour optimiser la forme d'onde de l'induction dans l'entrefer. A titre d'exemple, au moins une extrémité du logement en section transversale perpendiculairement à l'axe de rotation peut être de forme rectangulaire, triangulaire ou incurvée.

Les rangées peuvent être de longueur décroissante lorsque l'on se déplace en direction de l'entrefer, la plus longue étant plus proche de l'axe de rotation et la plus courte du côté de l'entrefer.

La disposition des logements et/ou des aimants permanents dans une rangée est de préférence symétrique par rapport à l'axe radial du pôle.

Les logements peuvent avoir une largeur constante ou variable lorsque l'on se déplace le long de leur axe longitudinal, dans un plan perpendiculaire à l'axe de rotation du rotor.

### Masse rotorique et arbre

Le rotor peut comporter un arbre s'étendant selon l'axe de rotation, sur lequel est disposée la masse magnétique rotorique. L'arbre peut être réalisé dans un matériau magnétique, ce qui permet avantageusement de diminuer le risque de saturation dans la masse rotorique et d'améliorer les performances électromagnétiques du rotor. L'arbre peut comporter un manchon magnétique en contact avec la masse rotorique, le manchon étant monté sur un axe, magnétique ou non.

En variante, le rotor peut comporter un arbre amagnétique sur lequel est disposée la masse rotorique. L'arbre peut être réalisé au moins en partie dans un matériau de la liste suivante, qui n'est pas limitative : acier, inox, titane ou tout autre matériau amagnétique La masse rotorique peut dans un mode de réalisation être disposée directement sur l'arbre amagnétique, par exemple sans jante intermédiaire. En variante, notamment dans le cas où l'arbre n'est pas amagnétique, le rotor peut comporter une jante entourant l'arbre du rotor et venant prendre appui sur ce dernier.

La masse rotorique s'étend selon l'axe de rotation et elle est disposée autour de l'arbre. L'arbre peut comporter des moyens de transmission de couple pour l'entraînement en rotation de la masse rotorique.

La masse rotorique peut être formée d'un empilement de couches de tôle magnétique. L'empilement de couches de tôle magnétique peut comporter un empilement de tôles magnétiques, chacune d'un seul tenant, chaque tôle formant une couche de l'empilement.

Une tôle peut comporter une succession de secteurs reliés par des ponts de matière tangentiels.

Chaque tôle rotorique est par exemple découpée dans une feuille d'acier magnétique, par exemple de l'acier de 0,1 à 1,5 mm d'épaisseur. Les tôles peuvent être revêtues d'un vernis isolant électrique sur leurs faces opposées avant leur assemblage au sein de l'empilement. L'isolation peut encore être obtenue par un traitement thermique des tôles.

En variante, la masse rotorique peut comporter une pluralité de pièces polaires assemblées sur l'arbre du rotor, lequel est dans ce cas de préférence amagnétique. L'assemblage peut être effectué par des queues d'aronde sur un arbre de la machine, ou en variante au moyen de tirants comme mentionné ci-dessus. Chaque pièce polaire peut comporter un empilement de tôles magnétiques.

La répartition des logements est avantageusement régulière et symétrique, facilitant la découpe de la tôle rotorique et la stabilité mécanique après découpe quand la masse rotorique est constituée d'une superposition de tôles rotoriques.

Le nombre de logements et d'aimants dépend de la polarité du rotor. La masse rotorique peut comporter un nombre quelconque de logements, par exemple entre 4 et 96 logements, mieux entre 8 et 40 logements, voire entre 12 et 32 logements.

Les aimants peuvent être enterrés dans la masse rotorique. Autrement dit, les aimants sont recouverts par des portions de tôles magnétiques au niveau de l'entrefer. La surface du rotor au niveau de l'entrefer peut être entièrement définie par le bord des couches de tôles magnétiques et non par les aimants. Les logements ne débouchent alors pas radialement vers l'extérieur.

La masse rotorique peut comporter un ou plusieurs trous pour alléger le rotor, permettre son équilibrage ou pour l'assemblage des tôles rotoriques la constituant. Des trous peuvent permettre le passage de tirants maintenant solidaires entre elles les tôles.

Les couches de tôles peuvent être encliquetées les unes sur les autres.

Les logements peuvent être remplis au moins partiellement, par une matière synthétique non magnétique. Cette matière peut bloquer en place les aimants dans les logements et/ou augmenter la cohésion du paquet de tôles.

La masse rotorique peut comporter, le cas échéant, un ou plusieurs reliefs contribuant au bon positionnement des aimants, notamment dans la direction radiale.

La masse rotorique peut présenter un contour extérieur qui est circulaire ou multilobé, une forme multilobée pouvant être utile par exemple pour réduire les ondulations de couple ou les harmoniques de courant ou de tension.

Le rotor peut être monté en porte à faux ou non.

Le rotor peut être réalisé en plusieurs morceaux de rotor alignés suivant la direction axiale, par exemple trois morceaux. Chacun des morceaux peut être décalé angulairement par rapport aux morceaux adjacents (« *step skew* » en anglais).

### Procédé de fabrication et machine

L'invention a encore pour objet, indépendamment ou en combinaison avec ce qui précède, un procédé de fabrication d'un stator, notamment d'un stator tel que défini plus haut, dans lequel on met en œuvre successivement les deux étapes suivantes :
(i) disposer des bobinages dans les encoches d'une couronne dentelée du stator, et
(ii) rapporter une culasse sur la couronne dentelée du stator.

A l'étape (i) on peut disposer au moins un bobinage dans deux encoches différentes non consécutives de la couronne dentelée du stator.

Les bobinages utilisés à l'étape (i) peuvent être obtenus par déformation préalable de navettes ayant deux longs côtés parallèles et deux extrémités semi-circulaire. Ladite déformation peut consister à écarter perpendiculairement à eux-mêmes les deux longs côtés des navettes de façon à obtenir les bobinages.

L'invention a encore pour objet, indépendamment ou en combinaison avec ce qui précède, une machine de fabrication d'un stator pour mettre en œuvre le procédé précédemment décrit, comportant des outils permettant de déformer simultanément plusieurs navettes, voire toutes les navettes, pour obtenir les bobinages d'un même stator.

La machine peut être configurée pour permettre la mise en place simultanée de plusieurs bobinages sur la couronne dentelée, voire de tous les bobinages. Compte tenu de l'imbrication des bobinages sur la couronne dentelée, on peut ainsi améliorer considérablement la vitesse de fabrication du stator.

L'invention pourra être mieux comprise à la lecture de la description détaillée qui va suivre, d'exemples de réalisation non limitatifs de celle-ci, et à l'examen du dessin annexé, sur lequel :
- la figure 1 représente en coupe transversale, de manière schématique et partielle, une machine comportant un stator réalisé conformément à l'invention,
- la figure 1a représente de manière schématique une bande de tôle destinée à former une couronne dentelée,
- les figures 2a à 2c illustrent la disposition des conducteurs électriques dans les encoches,
- le figure 3 est une vue schématique et partielle d'une navette,
- la figure 4 est une vue selon la flèche IV de la figure 3,
- la figure 5 est une vue en perspective, schématique et partielle, d'un bobinage, et
- la figure 6 est une vue schématique et partielle illustrant la fabrication du stator.

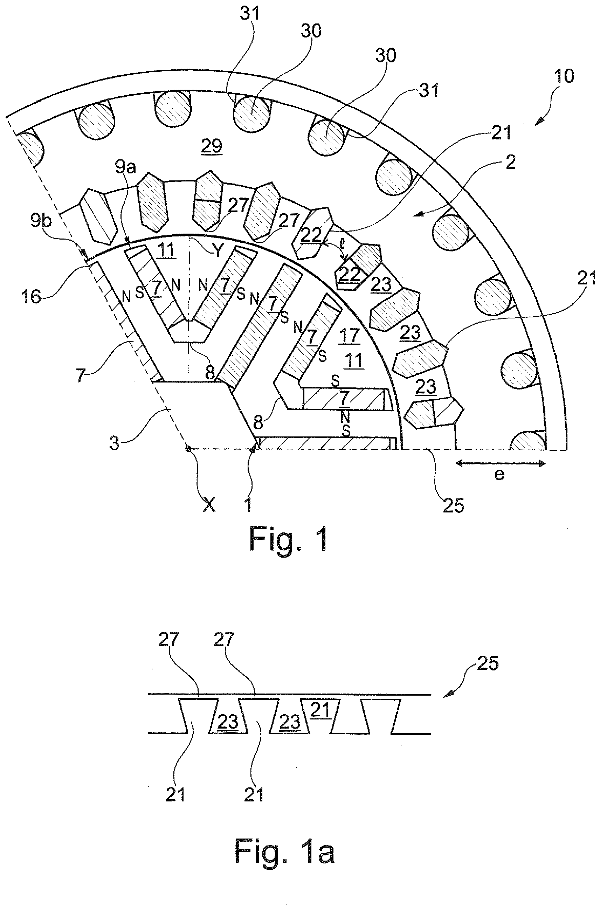

On a illustré à la figure 1 une machine électrique tournante 10 comportant un rotor 1 et un stator 2. Le stator permet de générer un champ magnétique tournant d'entraînement du rotor 1 en rotation, dans le cadre d'un moteur synchrone, et dans le cas d'un alternateur, la rotation du rotor induit une force électromotrice dans les bobinages du stator.

### Stator

Le stator 2 comporte des bobinages répartis 22, comme illustré, lesquels sont disposés dans des encoches 21 ménagées entre des dents 23 d'une couronne dentelée 25. Les encoches sont fermées vers l'entrefer par des ponts tangentiels 27 reliant entre elles deux dents consécutives de la couronne dentelée 25. En outre, le stator comporte une culasse 29 rapportée sur la couronne dentelée 25. La culasse 29 est équipée de nervures longitudinales semi-circulaires 31 destinées à loger des conduits 30 de circulation d'un liquide de refroidissement.

Les bobinages 22 sont disposés de manière répartie dans les encoches 21 et ont des conducteurs électriques 28 disposés de manière rangée dans les encoches 21.

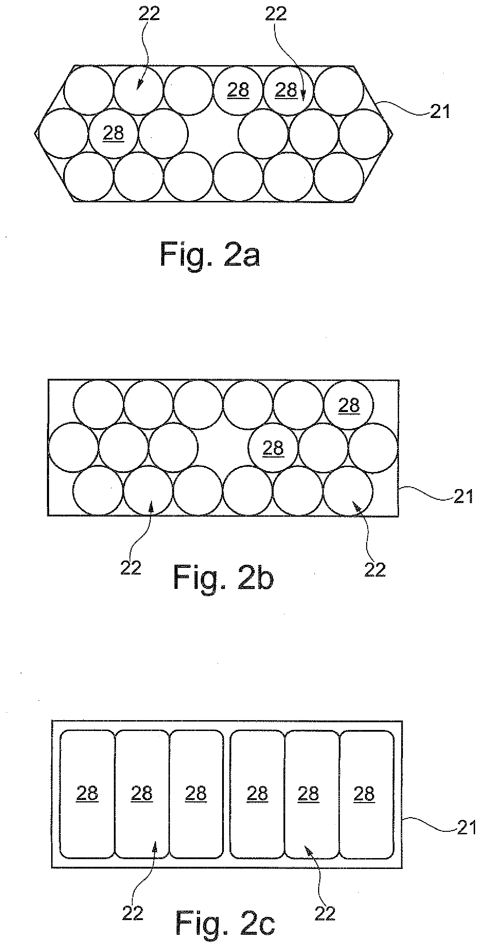

Les encoche 21 sont dans l'exemple décrit à bords radiaux parallèles entre eux, et sont en section transversale de forme hexagonale, étant en pointe de diamant. Les conducteurs électriques dans ces encoches sont de forme en section transversale circulaire. L'arrangement de ces derniers est un arrangement hexagonal, comme illustré à la figure 2a. Les ponts tangentiels 27 sont de largeur non constante, mais diminuant puis augmentant. Le taux de remplissage est dans ce cas de plus de 100%.

La couronne dentelée 25 est réalisée par enroulement en hélice d'une bande rectiligne de dents reliées par des ponts tangentiels 27, comme illustré sur la figure la. Les dents 23 de la bande rectiligne ménagent entre elles les encoches 21 qui ont des bords convergents, les bords des encoches étant parallèles entre eux lorsque la bande est enroulée sur elle-même pour former la couronne dentelée.

Dans une variante de réalisation, les encoches peuvent être de forme en section transversale rectangulaire, toujours avec des conducteurs électriques de forme en section transversale circulaire, comme illustré à la figure 2b.

Dans une autre variante encore, les encoches peuvent être de forme en section transversale rectangulaire, mais avec des conducteurs électriques de forme en section transversale rectangulaire, comme illustré à la figure 2c.

Le stator 2 illustré comporte plus précisément 27 encoches réparties en six pôles, avec un pas dentaire de 4/5. Autrement dit, il comporte 1,5 encoche par pôle et par phase.

Chaque encoche 21 comporte dans l'exemple décrit 18 conducteurs électriques, qui sont dans cet exemple des fils émaillés de diamètre 1,32 mm. Le remplissage en est amélioré et on obtient un meilleur couple résultant. Le taux de remplissage conventionnel est dans ce cas de plus de 94%. Par « taux de remplissage conventionnel », on entend le rapport entre la somme cumulée des carrés des diamètres des conducteurs, et la section transversale utile de l'encoche.

Chaque encoche comporte deux bobinages empilés, donc deux étages de bobinage.

L'épaisseur e de la culasse est relativement importante, par rapport aux machines connues, du fait que la hauteur d'encoche a pu être réduite grâce à l'augmentation du taux de remplissage

Par ailleurs, il en est de même de la largeur *l* des dents.

On peut ainsi obtenir une réduction importante de la consommation de champ électrique (ou ampère-tours) au stator, ou encore une augmentation significative du flux parcourant le stator.

### Rotor

Le rotor 1 représenté à la figure 1 comporte une masse magnétique rotorique 3 s'étendant axialement selon l'axe de rotation X du rotor, cette masse rotorique étant par exemple formée par un paquet de tôles magnétiques empilées selon l'axe X, les tôles étant par exemple identiques et superposées exactement. Elles peuvent être maintenues entre elles par clipsage, par des rivets, par des tirants, des soudures ou toute autre technique. Les tôles magnétiques sont de préférence en acier magnétique. Toutes les nuances d'acier magnétique peuvent être utilisées.

La masse rotorique 3 comporte une ouverture centrale 5 pour le montage sur un arbre. L'arbre peut, dans l'exemple considéré, être réalisé dans un matériau amagnétique, par exemple en inox amagnétique ou en aluminium, ou au contraire être magnétique.

Le rotor 1 comporte une pluralité d'aimants permanents 7 disposés dans des logements 8 de la masse magnétique rotorique 3. Dans l'exemple décrit, les aimants permanents 7 sont disposés en deux rangées 9a, 9b définissant les six pôles 11 du rotor. Chacune des rangées 9a, 9b comporte deux aimants permanents 7, qui sont chacun disposés de part et d'autre d'un axe radial Y dudit pôle 11.

Les aimants permanents 7 sont disposés tous les deux dans un logement commun 8 ménagé dans la masse magnétique rotorique 3 et traversé par l'axe radial Y du pôle. Ce logement 8 s'étend depuis l'entrefer en direction de l'arbre, puis de nouveau vers l'entrefer. Les logements 8 ont une forme de V ou de U.

Les aimants permanents 7 sont disposés en V orientés vers l'entrefer. Pour un même pôle, une rangée d'aimants permanents comporte ainsi deux branches latérales. Les V d'un même pôle sont disposés de manière concentrique, autrement dit les V d'un même pôle sont imbriqués les uns dans les autres. Un V a dans l'exemple décrit une forme évasée vers l'entrefer, les branches latérales du V étant non parallèles entre elles. Toutes les rangées d'un pôle sont dépourvues d'aimant central.

Les aimants permanents 7 sont de forme rectangulaire en section transversale. Ils peuvent être réalisés en ferrite ou en variante en terres rares, par exemple de type néodyme ou autre. De préférence, les aimants sont réalisés en ferrite.

Dans l'exemple illustré à la figure 1, le rotor comporte des ponts tangentiels 16 ménagés entre un logement 8 et l'entrefer. Il est dépourvu de pont de matière autre que tangentiel et en particulier est dépourvu de ponts radiaux.

La masse magnétique rotorique 3 comporte pour chaque pôle une pièce polaire 17 reliée au reste de la masse magnétique par les ponts tangentiels 16 ménagés entre chacune des deux extrémités du logement et la surface extérieure du rotor.

Dans une variante de réalisation, la masse magnétique rotorique 3 pourrait comporter des pièces polaires 17 indépendantes du reste de la masse magnétique rotorique.

Dans l'exemple décrit, la polarité du premier pôle du rotor est définie par une (ou plusieurs) première rangés 9a d'aimants permanents 7 propres et par une deuxième rangée 9b d'aimants permanents 7 partagés, laquelle deuxième rangée 9b définit également en partie la polarité du deuxième pôle du rotor adjacent au premier pôle. L'aimant permanent 7 partagé contribuant à la polarité du premier pôle contribue également à la polarité du deuxième pôle du rotor adjacent au premier pôle. La deuxième rangée 9b d'aimants permanents 7 définit ainsi simultanément les polarités de chacun des deux pôles consécutifs du rotor entre lesquels elle est située. La limite entre les deux pôles consécutifs passe par au moins ledit aimant permanent partagé 7.

Dans l'exemple illustré à la figure 1, chacun des pôles du rotor comporte une unique première rangée. La première rangée de chacun des pôles est dans ces exemples disposée en V, la concavité de la rangée étant orientée vers le sommet du pôle, c'est à dire vers l'entrefer. Il pourrait bien entendu en être autrement, le rotor pouvant comporter par exemple deux premières rangées, ou plus encore.

### Procédé de fabrication du stator et machine

Le stator est obtenu au moyen du procédé de fabrication qui va maintenant être décrit en détails.

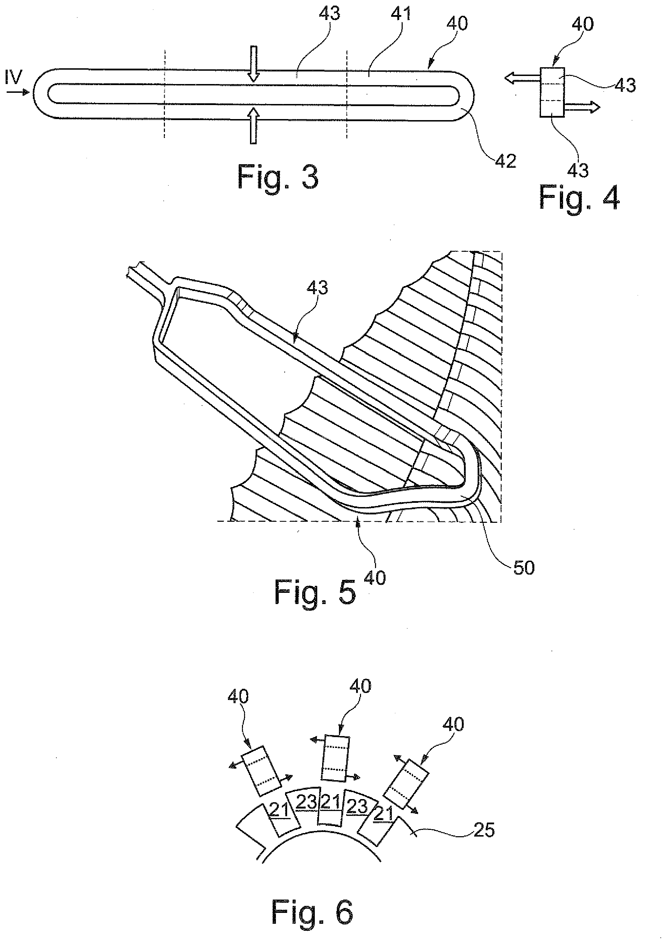

Dans une étape préparatoire, on fabrique des navettes 40 en enroulant des conducteurs électriques en forme de piste de stade antique, avec des virages aussi serrés que possible, comme illustré sur la figure 3, de manière à avoir deux longs côtés parallèles 41 et deux extrémités semi-circulaire 42.

Puis on écarte perpendiculairement à eux-mêmes deux portions rectilignes 43 des deux longs côtés parallèles 41 de la navette 40, comme illustré sur la figure 4, lesquelles portions rectilignes 43 sont destinées à former les portions actives du bobinage final 22, c'est-à-dire à être insérées dans les encoches 21, le reste formant les têtes de bobines 50. Le bobinage ainsi obtenu est illustré à la figure 5.

Enfin, on met en œuvre successivement les deux étapes suivantes :
(i) on dispose tout d'abord les bobinages 22 obtenus à partir des navettes 40 dans les encoches 21 de la couronne dentelée 25 du stator 2, et
(ii) on rapporte la culasse 29 sur la couronne dentelée 25 du stator 2.

A l'étape (i) on dispose chaque bobinage 22 dans deux encoches différentes non consécutives de la couronne dentelée du stator, de manière à obtenir un stator à bobinages répartis.

Ce procédé peut être mis en œuvre au moyen d'une machine de fabrication d'un stator, comportant des outils permettant de déformer simultanément plusieurs navettes, voire toutes les navettes, pour obtenir les bobinages d'un même stator.

La machine peut être configurée pour permettre la mise en place simultanée de plusieurs bobinages sur la couronne dentelée, voire de tous les bobinages, comme illustré sur la figure 6.

L'ensemble obtenu peut être imprégné avant d'être inséré dans la culasse annulaire 29 préparée par ailleurs.

Bien entendu, l'invention n'est pas limitée aux exemples de réalisation qui viennent d'être décrits.

L'expression « comportant un » doit être comprise comme étant synonyme de « comprenant au moins un ».

## Revendications

1. Stator (2) de machine électrique tournante (10), comportant :
- une couronne dentelée (25) comportant des dents (23) définissant entre elles des encoches (21) ouvertes radialement vers l'extérieur,
- des bobinages (22) disposés de manière répartie dans les encoches (21), donc au moins l'un des bobinages (22) passe successivement dans deux encoches (21) non adjacentes, ayant des conducteurs électriques (28) disposés de manière rangée dans les encoches (21), et
- une culasse (29) qui n'est pas réalisée d'un seul tenant avec la couronne dentelée (25) et qui est rapportée sur la couronne dentelée (25), **caractérisé en ce qu'**au moins une encoche (21) est en section transversale, perpendiculairement à l'axe de rotation, de forme hexagonale à fond se rétrécissant en direction de l'entrefer.

2. Stator selon la revendication 1, dans lequel au moins une encoche (21) est fermée du côté de l'entrefer par un pont tangentiel (27) reliant entre elles deux dents (23) consécutives de la couronne dentelée (25).

3. Stator selon l'une des revendications précédentes, dans lequel au moins une encoche (21) est à bords radiaux parallèles entre eux.

4. Stator selon l'une quelconque des revendications précédentes, dans lequel au moins une dent (23), mieux toutes les dents (23), sont de forme générale trapézoïdale en section transversale.

5. Stator selon l'une quelconque des revendications précédentes, dans lequel les conducteurs électriques (28) présents dans les encoches (21) sont de section circulaire ou rectangulaire.

6. Stator selon l'une quelconque des revendications précédentes, dans lequel la couronne dentelée (25) est réalisée par enroulement en hélice d'une bande de dents (23) reliées par des ponts tangentiels, les dents (23) de la bande à l'état rectiligne ménageant entre elles des encoches (21) qui ont des bords convergents, les bords des encoches (21) étant sensiblement parallèles entre eux lorsque la bande est enroulée sur elle-même pour former la couronne dentelée (25).

7. Machine électrique tournante (10) comportant un stator (2) selon l'une quelconque des revendications précédentes et un rotor (1) à aimants permanents.

8. Procédé de fabrication d'un stator (2) selon l'une quelconque des revendications 1 à 6, dans lequel on met en œuvre successivement les deux étapes suivantes :
(i) disposer des bobinages (22) dans les encoches (21) d'une couronne dentelée (25) du stator (2), dans lequel au moins une encoche (21) est en section transversale, perpendiculairement à l'axe de rotation, de forme hexagonale à fond se rétrécissant en direction de l'entrefer, et
(ii) rapporter une culasse (29) qui n'est pas réalisé d'un seul tenant avec la couronne dentelée (25) sur la couronne dentelée (25) du stator (2).

9. Procédé selon la revendication précédente, dans lequel à l'étape (i) on dispose au moins un bobinage (22) dans deux encoches (21) différentes non consécutives de la couronne dentelée (25) du stator (2).

10. Procédé selon l'une des deux revendications précédentes, dans lequel les bobinages (22) utilisés à l'étape (i) sont obtenus par déformation préalable de navettes (40) ayant deux longs côtés parallèles (41) et deux extrémités semi-circulaires (42) .

11. Procédé selon l'une des trois revendications immédiatement précédentes, dans lequel ladite déformation consiste à écarter perpendiculairement à eux-mêmes les deux longs côtés (41) des navettes (40) de façon à obtenir les bobinages (22).

12. Machine de fabrication d'un stator (2) pour mettre en œuvre le procédé selon l'une quelconque des revendications 8 à 11, comportant des outils permettant de déformer simultanément plusieurs navettes (40), mieux toutes les navettes (40), pour obtenir les bobinages (22) d'un même stator (2).

13. Machine selon la revendication précédente, configurée pour permettre la mise en place simultanée de plusieurs bobinages (22) sur la couronne dentelée (25), mieux de tous les bobinages (22).

## Patentansprüche

1. Stator (2) für eine drehende elektrische Maschine (10), umfassend:
- einen Zahnkranz (25), der Zähne (23) umfasst, die zwischen sich radial nach außen offene Nuten (21) definieren,
- Wicklungen (22), die verteilt in den Nuten (21) angeordnet sind, wobei mindestens eine der Wicklungen (22) nacheinander in zwei nicht benachbarten Nuten (21) verläuft, und elektrische Leiter (28) aufweisen, die geordnet in den Nuten (21) angeordnet sind, und
- ein Joch (29), das nicht einstückig mit dem Zahnkranz (25) ausgeführt ist und das an den Zahnkranz (25) angesetzt ist, **dadurch gekennzeichnet, dass** mindestens eine Nut (21) im Querschnitt, senkrecht zur Drehachse, eine sechseckige Form mit in Richtung des Spalts sich verjüngendem Boden hat.

2. Stator nach Anspruch 1, bei dem mindestens eine Nut (21) spaltseitig durch eine tangentiale Brücke (27) geschlossen ist, die zwei aufeinander folgende Zähne (23) des Zahnkranzes (25) untereinander verbindet.

3. Stator nach einem der vorhergehenden Ansprüche, bei dem mindestens eine Nut (21) parallel zueinander verlaufende radiale Ränder hat.

4. Stator nach einem der vorhergehenden Ansprüche, bei dem mindestens ein Zahn (23), besser alle Zähne (23), im Querschnitt eine trapezförmige Grundform haben.

5. Stator nach einem der vorhergehenden Ansprüche, bei dem die elektrischen Leiter (28), die sich in den Nuten (21) befinden, einen runden oder rechteckigen Querschnitt haben.

6. Stator nach einem der vorhergehenden Ansprüche, bei dem der Zahnkranz (25) durch schraubenförmiges Wickeln eines Streifens aus Zähnen (23) ausgeführt ist, die durch tangentiale Brücken verbunden sind, wobei die Zähne (23) des Streifens im geradlinigen Zustand zwischen sich Nuten (21) ausbilden, die konvergierende Ränder haben, wobei die Ränder der Nuten (21) im Wesentlichen parallel zueinander sind, wenn der Streifen aufgerollt ist, um den Zahnkranz (25) zu bilden.

7. Drehende elektrische Maschine (10) mit einem Stator (2) nach einem der vorhergehenden Ansprüche und einem Rotor (1) mit Permanentmagneten.

8. Verfahren zur Herstellung eines Stators (2) nach einem der Ansprüche 1 bis 6, bei dem die beiden folgenden Schritte nacheinander ausgeführt werden:
(i) Anordnen von Wicklungen (22) in den Nuten (21) eines Zahnkranzes (25) des Stators (2), bei dem mindestens eine Nut (21) im Querschnitt, senkrecht zur Drehachse, eine sechseckige Form mit in Richtung des Spalts sich verjüngendem Boden hat, und
(ii) Ansetzen eines Jochs (29), das nicht einstückig mit dem Zahnkranz (25) ausgeführt ist, an den Zahnkranz (25) des Stators (2).

9. Verfahren nach dem vorhergehenden Anspruch, bei dem man im Schritt (i) mindestens eine Wicklung (22) in zwei verschiedenen, nicht aufeinander folgenden Nuten (21) des Zahnkranzes (25) des Stators (2) anordnet.

10. Verfahren nach einem der beiden vorhergehenden Ansprüche, bei dem die im Schritt (i) verwendeten Wicklungen (22) durch vorherige Verformung von vorgefertigten Wicklungen (40) erhalten werden, die zwei parallele Langseiten (41) und zwei halbkreisförmige Enden (42) aufweisen.

11. Verfahren nach einem der drei unmittelbar vorhergehenden Ansprüche, bei dem die Verformung darin besteht, die beiden Langseiten (41) der vorgefertigten Wicklungen (40) senkrecht zu sich selbst zu beabstanden, so dass die Wicklungen (22) erhalten werden.

12. Maschine zur Herstellung eines Stators (2) zum Einsetzen des Verfahrens nach einem der Ansprüche 8 bis 11, umfassend Werkzeuge, die es ermöglichen, gleichzeitig mehrere vorgefertigte Wicklungen (40), besser alle vorgefertigten Wicklungen (40), zu verformen, um die Wicklungen (22) desselben Stators (2) zu erhalten.

13. Maschine nach dem vorhergehenden Anspruch, die dazu eingerichtet ist, die gleichzeitige Anordnung mehrerer Wicklungen (22), besser aller Wicklungen (22), auf dem Zahnkranz (25) zu ermöglichen.

## Claims

1. A stator (2) for a rotary electric machine (10), comprising:
- a ring gear (25) having teeth (23) that define slots (21) between one another that are open radially toward the outside,
- windings (22) that are disposed in a distributed manner in the slots (21), i.e. at least one of the windings (22) passes through two non-adjacent slots (21) in succession, having electrical conductors (28) that are disposed in an arranged manner in the slots (21), and
- a yoke (29) that is not produced in one piece with the ring gear (25) and is attached to the ring gear,
**characterized by** the fact that at least one slot (21) has in cross section, perpendicularly to the axis of rotation, an hexagonal shape with a bottom that narrows in the direction of the air gap.

2. The stator as claimed in claim 1, wherein at least one slot (21) is closed on the air gap side by a tangential bridge (27) that connects two consecutive teeth (23) of the ring gear (25) together.

3. The stator as claimed in either of the preceding claims, wherein at least one slot (21) has edges that are radially parallel to one another.

4. The stator as claimed in any one of the preceding claims, wherein at least one tooth (23), better still all the teeth (23), have a trapezoidal overall shape in cross section.

5. The stator as claimed in any one of the preceding claims, wherein the electrical conductors (28) present in the slots (21) have a circular or rectangular section.

6. The stator as claimed in any one of the preceding claims, wherein the ring gear (25) is produced by helically winding up a strip of teeth (23) connected by tangential bridges, the teeth (23) of the strip in the rectilinear state forming slots (21) between one another that have convergent edges, the edges of the slots (21) being substantially parallel to one another when the strip is wound up on itself to form the ring gear (25).

7. A rotary electric machine (10) comprising a stator (2) as claimed in any one of the preceding claims and a permanent magnet rotor (1).

8. A method for producing a stator (2) as claimed in any one of claims 1 to 6, wherein the two following steps are implemented in succession:
(i) disposing windings (22) in the slots (21) in a ring gear (25) of the stator (2), wherein at least one slot (21) has in cross section, perpendicularly to the axis of rotation, an hexagonal shape with a bottom that narrows in the direction of the air gap, and
(ii) attaching a yoke (29) that is not produced in one piece with the ring gear (25) to the ring (25) gear of the stator (2).

9. The method as claimed in the preceding claim, wherein, in step (i), at least one winding (22) is disposed in two different, non-consecutive slots (21) in the ring gear (25) of the stator (2).

10. The method as claimed in either of the two preceding claims, wherein the windings (22) used in step (i) are obtained by prior deformation of shuttles (40) having two parallel long sides (41) and two semicircular ends (42).

11. The method as claimed in one of the three immediately preceding claims, wherein said deformation consists in spacing the two long sides (41) of the shuttles (40) perpendicularly apart from one another so as to obtain the windings (22).

12. A machine for manufacturing a stator (2) for implementing the method as claimed in any one of claims 8 to 11, comprising tools for simultaneously deforming several shuttles (40), better still all the shuttles (40), so as to obtain the windings (22) of a single stator (2).

13. The machine as claimed in the preceding claim, which is configured to allow the simultaneous fitting of several windings (22), better still of all the windings (22), on the ring gear (25).
